Europäisches Patentamt

(19) European Patent Office

Office européen des brevets

(11) Numéro de publication: **0 002 631**

B1

(12) **FASCICULE DE BREVET EUROPEEN**

(21) Numéro de dépôt: **78400203.2**

(22) Date de dépôt: **01.12.78**

(51) Int. Cl.³: **B 60 T 7/12,**
**B 62 B 5/04**

---

(54) **Dispositif de freinage automatique pour système rotatif**

---

(30) Priorité: **12.12.77 FR 7737347**

(43) Date de publication de la demande:
**27.06.79 Bulletin 79/13**

(45) Mention de la délivrance du brevet:
**23.07.80 Bulletin 80/15**

(84) Etats contractants désignés:
**BE CH DE FR GB IT NL SE**

(56) Documents cités:
**FR - A - 1 590 648**
**FR - A - 1 600 143**
**GB - A - 273 500**
**GB - A - 286 411**
**GB - A - 1 353 192**
**US - A - 1 306 766**
**US - A - 3 897 857**

(73) Titulaire: **SAF-Chainette**
**Rue Lavoisier**
**F - 79200 Parthenay (FR)**

(72) Inventeur: **Villes, Jean-Pierre**
**24, rue Honoré de Balzac**
**F - 79200 Parthenay (FR)**
**Soulard, Jacques**
**19, rue des Arbres**
**F - 79200 Pompaire (FR)**

(74) Mandataire: **Liboz, André**
**L'air Liquide Societe Anonyme pour**
**l'etude et L'exploitation des Procedes**
**Georges Claude 75, Quai d'Orsay**
**F - 75321 Paris Cédex 7 (FR)**

Courier Press, Leamington Spa, England.

Dispositif de freinage automatique pour système rotatif

La présente invention concerne essentiellement un dispositif de freinage automatique pour un système muni d'un organe rotatif au moins, porté par un support également rotatif, monté lui-même sur un élément fixe et relié à un moteur d'entraînement, par exemple pour un fauteuil roulant pour handicapé physique comportant deux roues montées rotativement sur un arbre relié à un moteur électrique et monté lui-même rotativement sur le bati dudit fauteuil.

Les systèmes de ce type actuellement connus, en particulier les fauteuils pour handicapés physiques mus par un moteur d'entraînement électrique, sont munis de différents dispositifs de freinage : dispositifs fonctionnant par contre courant, par irréversibilité, freins électromagnétiques, etc...

Ces dispositifs connus présentent divers inconvénients: le freinage par contre-courant est brutal à grande vitesse et insuffisant à faible vitesse; le freinage par irréversibilité constitue une solution très coûteuse en énergie du fait de son faible rendement et est d'une utilisation malaisée; enfin, le freinage électromagnétique, qui peut fonctionner soit par manque de courant, soit par appel de courant, constitue un appareillage coûteux et, dans le cas du moins de fonctionnement par appel de courant, n'offre aucune sécurité en cas de défaillance de la source d'énergie électrique.

On connaît, par le brevet US - A - 3 897 857, un dispositif de freinage pour fauteuil roulant quie utilise un ressort hélicoïdal entourant un tambour de freinage. Le ressort a une extrémité fixée au bâti du fauteuil, l'autre extrémité reliée à un mécanisme, actionné à la main, qui exerce un force de traction et tend à contracter le ressort et à l'appliquer contre le tambour. Ce dispositif ne fonctionne pas de façon automatique lorsque le fauteuil est entraîné par la force d'inertie et n'assure pas une action de freinage progressive.

On connaît également, par le brevet US - A - 1 306 766, un dispositif de freinage à ressort hélicoïdal qui est également disposé autour d'un tambour contre lequel il est appliqué lorsqu'il est actionné par un mécanisme à levier. Ce dispositif n'assure pas une action progressive et ne fonctionne pas par inertie.

La présente invention a essentiellement pour but de pallier les inconvénients des dispositifs actuellement connus et propose à cet effet un dispositif de freinage qui comporte deux pièces d'accouplement ou analogues, solidaires respectivement du support et de l'organe rotatif précités, une lamelle-ressort en forme d'arc de cercle logée dans un évidement circulaire de l'élément fixe et susceptible de se déformer élastiquement sous l'effet d'une force tangentielle par diminution ou augmentation de son rayon selon le sens de ladite force, les dites pièces d'accouplement et ladite lamelle étant prévues pour venir en engagement mutuel, de sorte que les pièces deviennent solidaires l'une de l'autre en rotation et que la lamelle est soumise à une force tangentielle qui l'éçarte de, ou au contraire, l'applique contre la paroi interne dudit évidement, selon que l'action motrice est due au support ou à l'organe rotatif précités respectivement.

On voit que lorsque l'action motrice est due à l'organe rotatif, c'est-à-dire lorsque le système est entraîné par inertie, la lamelle se déforme de façon à exercer une action de freinage qui est proportionnelle à cette déformation. Il en résulte une grande douceur de ralentissement, appréciable en particulier pour les fauteuils d'handicapés.

Par ailleurs, le dispositif selon l'invention est constitué par un nombre restreint de parties constitutives très simples, indépendantes du circuit électrique. Il est donc d'un prix de revient peu élevé et d'un fonctionnement très sûr.

Selon une autre caractéristique de l'invention, la pièce d'accouplement du support rotatif est constituée par un disque fixé sur ledit support, par exemple claveté sur l'arbre ou analogue et logé dans l'évidement précité, concentriquement à la lamelle ressort, ledit disque étant muni d'une encoche débouchant sur sa périphérie.

Selon encore une autre caractéristique de l'invention, la pièce d'accouplement de l'organe rotatif précité est constituée par un doigt ou analogue prévu pour pénétrer dans l'encoche du disque précité.

Ce disque et ce doigt, lorsqu'ils sont en prise l'un avec l'autre rendent l'organe et le support solidaires en rotation.

Toujours selon l'invention, la lamelle-ressort précitée est munie, à ses deux extrémités, de deux pattes disposées sensiblement radialement et engagées dans l'encoche du disque précité, de part et d'autre dudit doigt.

Grâce à ces deux pattes un effort tangentiel est appliqué à la lamelle-ressort, effort qui la déforme dans un sens ou dans l'autre.

D'autres caractéristiques et avantages de l'invention apparaîtront au cours de la description qui va suivre.

Dans le dessin annexé donné uniquement à titre d'exemple non limitatif:

— la figure 1 est une vue partielle en coupe d'un fauteuil pour handicapé physique muni d'un dispositif de freinage selon l'invention,

— la figure 2 est une coupe selon la ligne II—II de la figure 1,

— les figures 3 à 6 sont des vues partielles correspondant à la figure 2 qui illustrent le fonctionnement du dispositif selon les divers cas pouvant se présenter dans la pratique.

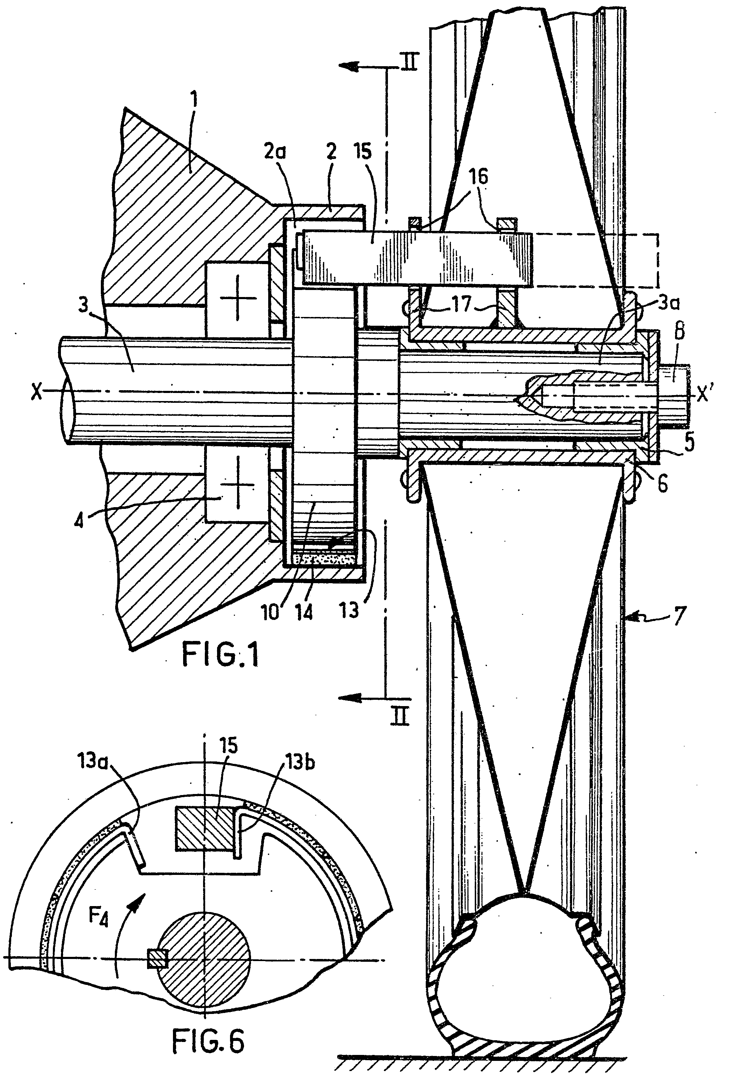

En se référant à la figure 1, on voit que le bâti d'un fauteuil roulant électrique, représenté de façon partielle et schématique et désigné par la référence 1, est muni d'un prolongement 2 formant moyeu et délimitant intérieurement un évidement circulaire 2a. Un arbre 3, dont l'axe XX' coïncide avec l'axe de l'évidement 2a, est relié à un moteur d'entraînement électrique (non représenté) et est monté rotativement sur le bâti 1, par intermédiaire de roulements tels que 4. Sur le prolongement 3a de l'arbre 3 est monté rotativement, par l'intermédiaire de portées 5, le moyeu 6 d'une roue 7, la fixation étant assurée par un boulon 8.

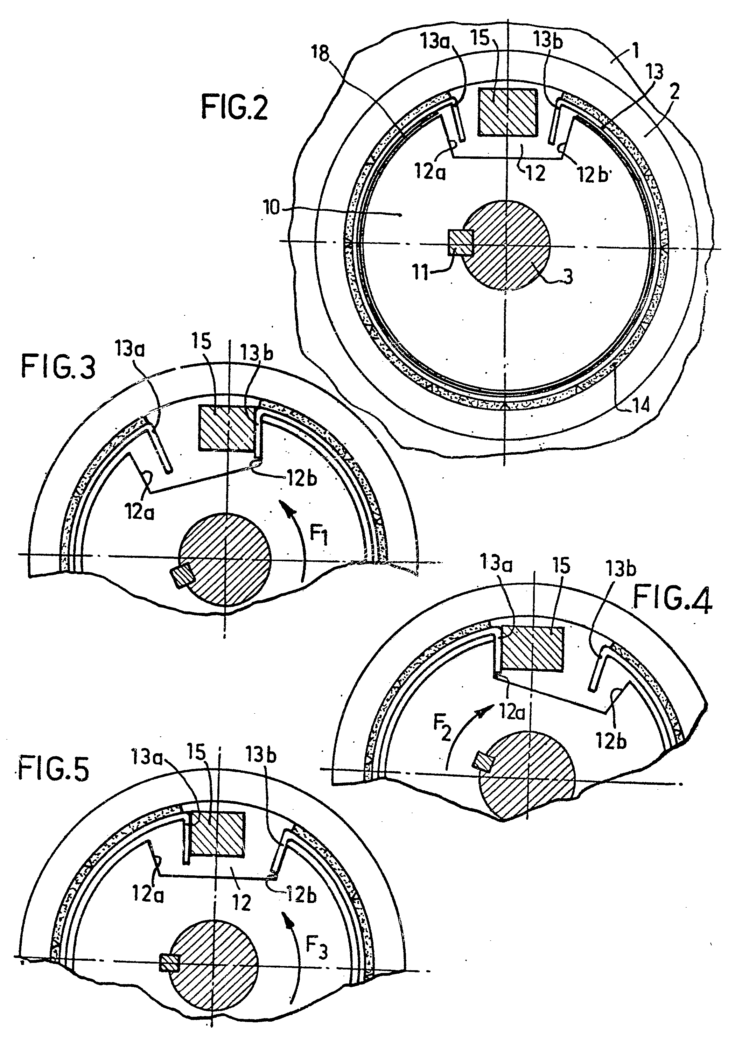

Le support rotatif, constitué par l'arbre 3, et l'organe rotatif, constitué par la roue 7, sont munis de deux pièces d'accouplement constituées respectivement par un disque 10 rendu solidaire de l'arbre 3 par une clavette 11 et muni d'une encoche 12 et par un doigt 15 monté de façon coulissante dans les lumières 16 d'une pièce 17 en forme de fourche solidaire du moyeu 6 de la roue 7. Le doigt 15 vient s'engager, lorsqu'il est en la position représentée en traits pleins sur la figure 1, dans l'encoche 12 du disque 10 et dégage cette encoche lorsqu'il est dans la position représentée en pointillés. Les dimensions du doigt 15 sont nettement inférieures à celles de l'encoche 12 de façon à laisser subsister un jeu important, comme on le voit en particulier à la figure 2.

Une lamelle-ressort 13 en forme d'arc de cercle est logée dans l'évidement 2a, concentriquement à l'axe XX', cette lamelle étant insérée entre le disque 10 et la paroi interne dudit évidement. La lamelle 13 est munie, à ses deux extrémités, de deux pattes 13a et 13b disposées sensiblement radialement, ces deux pattes pénétrant dans l'encoche 12, entre les faces 12a et 12b de cette dernière respectivement, et le doigt 15. La lamelle-ressort 13 est munie extérieurement d'une semelle ou bande de friction 14 prévue pour venir en appui contre la paroi interne de l'évidement 2a. La lamelle-ressort est en outre munie intérieurement d'une bande souple 18 de densité importante dont le rôle est d'empêcher la lamelle de vibrer pendant la rotation de l'organe rotatif par augmentation de sa masse. La bande 18 peut être constituée par un composé de ferrite magnétique et d'un liant élastomère, de sorte qu'elle adhère magnétiquement à la lamelle-ressort et ne modifie pas, du fait de sa souplesse, l'élasticité de ladite lamelle-ressort.

Le fonctionnement du dispositif de freinage selon l'invention est le suivant:

— les figures 3 et 4 sont relatives au cas où le fauteuil est entraîné par le moteur électrique. Dans ce cas l'arbre 3 a, vis-à-vis de la roue 7, une action motrice, tandis que ladite roue a une action résistante.

Dans le cas de la figure 3 dans laquelle l'arbre 3 tourne selon la flèche F1 (correspondant par exemple à la marche avant), la face 12b de l'encoche 12 vient s'appuyer contre le doigt 15 par l'intermédiaire de la patte 13b de la lamelle-ressort 13, cette dernière, sus l'influence de la force qui lui est ainsi appliquée sensiblement tangentiellement, a tendance à s'enrouler sur elle-même, diminuant ainsi son diamètre extérieur et écartant la semelle 14 de la paroi interne de l'évidement 2a. L'entraînement en rotation du doigt 15, et par conséquent de la roue 7, se fait donc sans effet de freinage. Dans le cas de la figure 4 dans laquelle la rotation de l'arbre 3 se fait dans le sens de la flèche F2 (correspondant par exemple à la marche arrière), c'est à la face 12a de l'encoche 12 qui vient au contact du doigt 15 par l'intermédiaire de la patte 13a de la lamelle-ressort. Comme dans le cas précédent, la lamelle-ressort a tendance à s'enrouler sur elle-même, de sorte que l'entraînement de la roue a lieu sans effet de freinage.

— les figures 5 et 6 sont relatives au cas où le fauteuil est entraîné non plus par le moteur mais par inertie. Dans ce cas, l'arbre 3 est résistant tandis que la roue 7 a une action motrice.

Dans le cas de la figure 5 où la rotation de la roue se fait dans le sens de la flèche F3 (marche avant), le doigt quitte la position représentée à la figure 3 et recontre la patte 13a avant de venir en appui, par l'intermédiaire de ladite patte, contre la face 12a de l'encoche 12. L'action du doigt 15 sur la patte 13a a pour effet de déformer la lamelle 13 de façon à augmenter son diamètre en raison des forces de friction entre la semelle 14 et la paroi interne de l'évidement 2a. Il en résulte une action de freinage sur le doigt 15 donc sur la roue 7.

Dans le cas de la figure 6 qui correspond à une rotation de la roue 7 dans le sens de la flèche F4 (marche arrière par exemple), le doigt 15 rencontre la patte 13b, ce qui provoque, comme dans le cas précédent, une augmentation du diamètre de la lamelle 13 et par conséquent un effet de freinage.

Il convient de remarquer que le mode de fonctionnement du dispositif représenté aux figures 5 et 6 reste valable lorsque le fauteuil est à l'arrêt, c'est-à-dire lorsque le doigt 15 et le disque 10 sont tous deux immobiles.

On voit donc que le dispositif selon l'invention exerce, lorsque la route est motrice, une action de freinage progressive en même temps qu'il assure, à l'arrêt, un véritable blocage.

On pourrait apporter au mode de réalisation décrit et représenté, de nombreuses variantes sans pour autant sortir du cadre de l'invention. Il convient de remarquer par ailleurs que le dispositif selon l'invention est applicable non seulement aux fauteils pour handicapés physiques mais également à tous dispositifs comportant un rotor monté rotativement sur un arbre ou analogue, lui-même monté rotativement sur un stator.

**Revendications**

1. Dispositif de freinage automatique pour un système muni d'un organe rotatif au moins

porté par un support également rotatif monté lui-même sur un élément fixe, et relié à un moteur d'entraînement, par exemple pour un fauteuil roulant pour handicapé physique comportant deux roues montées rotativement sur un arbre relié à un moteur électrique et monté lui-même rotativement sur le bâti dudit fauteuil, caractérisé en ce qu'il comporte deux pièces d'accouplement ou analogues (10, 15), solidaires respectivement du support (3) et de l'organe rotatif (7) précités, une lamelle-ressort (13) en forme d'arc de cercle logée dans un évidement circulaire (2a) de l'élément fixe (1) et susceptible de se déformer élastiquement sous l'effet d'une force tangentielle par diminution ou augmentation de son rayon selon le sens de ladite force, les dites pièces d'accouplement (10, 15) et ladite lamelle (13) étant prévues pour venir en engagement mutuel de sorte que les pièces (10, 15) deviennent solidaires l'une de l'autre en rotation et que la lamelle (13) est soumise à une force tangentielle qui l'écarte de, ou au contraire, l'applique contre la paroi interne dudit évidement (2a), selon que l'action motrice est due au support (3) ou à l'organe rotatif (7) précité respectivement.

2. Dispositif selon la revendication 1, caractérisé en ce que la pièce d'accouplement (10) du support rotatif (3) est constituée par un disque fixé sur ledit support, par exemple claveté sur l'arbre ou analogue précité, et logé dans l'évidement (2a) précité, concentriquement à la lamelle-ressort (13), ledit disque (10) étant muni d'une encoche (12) débouchant sur sa périphérie.

3. Dispositif selon la revendication 2, caractérisé en ce que la pièce d'accouplement (15) de l'organe rotatif (7) précité est constituée par un doigt ou analogue prévu pour pénétrer dans l'encoche (12) du disque (10) précité.

4. Dispositif selon la revendication 3, caractérisé en ce que la lamelle-ressor (13) précitée est munie, à ses deux extrémités, de deux pattes (13a, 13b) disposées sensiblement radialement et engagées dans l'encoche (12) du disque (10) précité, de part et d'autre dudit doigt (15).

5. Dispositif selon la revendication 4, caractérisé en ce que la lamelle-ressort (13) est munie extérieurement d'une semelle ou bande de friction (14).

6. Dispositif selon la revendication 3, caractérise en ce que ledit doigt (15) est monté de façon escamotable sur l'organe rotatif (7), par exemple les roues du fauteuil roulant précité.

7. Dispositif selon la revendication 6, caractérisé en ce que ledit doigt (15) est monté coulissant selon une direction parallèle à l'axe de rotation dudit organe rotatif (7).

8. Dispositif selon la revendication 5, caractérisé en ce que la lamelle-ressort (13) est munie intérieurement d'une bande (18) formée d'un matériau souple de densité élevée.

## Claims

1. An automatic braking device for a system provided with at least one rotary member carried by an equally rotary carrier which is itself fitted to a stationary element and connected to a driving motor, for example for a wheelchair for a physically handicapped person, comprising two wheels rotatably fitted to a shaft coupled to an electric motor and itself rotatably fitted on the framework of said wheelchair, characterised in that it comprises two coupling or similar members (10, 15) in unit, respectively, with the aforesaid carrier (3) and the rotary member (7), a blade spring (13) of arcuate shape housed in a circular recess (2a) of the stationary element (1) and capable of being deformed resiliently under the action of a tangential force by reduction or increase of its radius in the direction of the said force, the said coupling members (10, 15) and the said blade (13) being arranged to come into mutual engagement so that the members (10, 15) become locked together in rotation and that the blade (13) is exposed to a tangential force which moves it away from or on the contrary applies it against, the inner surface of the said recess (2a) in dependance upon whether the motive action is attributable to the carrier (3) or to the aforesaid rotary member (7), respectively.

2. A device according to claim 1, characterised in that the coupling member (10) of the rotary carrier (3) is formed by a disc secured on said carrier, for example keyed on the aforesaid shaft or the like, and housed in the aforesaid recess (2a) concentrically to the blade spring (13), said disc (10) being provided with an excision (12) opening into its periphery.

3. A device according to claim 2, characterised in that the coupling member (15) of the aforesaid rotary member (7) is formed by a projection or the like arranged to penetrate into the excision (12) of the aforesaid disc (10)

4. A device according to claim 3, characterised in that the aforesaid blade spring (13) is provided at its two extremities with two hooks (13a, 13b) positioned substantially radially and engaged in the excision (12) of the aforesaid disc (10) at either side of the said projection (15).

5. A device according to claim 4, characterised in that the blade spring (13) is provided externally with a friction sole or strip (14).

6. A device according to claim 3, characterised in that the said projection (15) is mounted in withdrawable manner on the rotary member (7), for example the wheels of the aforesaid wheelchair.

7. A device according to claim 6, characterised in that said projection (15) is arranged to be slidable in a direction parallel to the axis of rotation of said rotary member (7).

8. A device according to claim 5, characterised in that the blade spring (13) is provided internally with a strip (18) formed from a flexible material of high density.

**Patentansprüche**

1. Automatische Bremsvorrichtung für ein System mit einem Drehteil, welches mindestens durch eine ebenfalls drehbare Stütze getragen ist, die selbst auf einem festen Teil angeordnet und mit einem Antriebsmotor verbunden ist, z.B. für einen Rollstuhl für Körperbehinderte, mit zwei Rädern, die auf einer Welle drehbar angeordnet sind, welche mit einem Elektromotor verbunden und selbst auf dem Rahmen des Rollstuhles drehbar befestigt ist, dadurch gekennzeichnet, daß zwei Kupplungsstücke oder dergleichen (10, 15) vorgesehen sind, die formschüssig mit der Stütze (3) und dem genannten Drehteil (7) verbunden sind, eine Lamallenfeder (13) in Form eines Kreisbogens in einer kreisförmigen Ausnehmung (2a) des festen Teils (1) angeordnet und unter der Einwirkung eine Tangentialkraft unter Verminderung oder Vergrößerung ihres Radius elastisch deformierbar ist, und zwar je nach der Kraftrichtung, daß die Kupplungsstrücke (10, 15) und die Lamellenfeder (13) gegenseitig so in Eingriff bringbar sind, daß die Stücke (10, 15) miteinander beim Drehen in formschlüssige Verbindung gelangen und daß die Lamellanfeder (13) einer Tangentialkraft unterworfen wird, welche die Lamellanfeder (13) entweder von der Innenwand dieser Ausnehmung (2a) entfernt oder im Gegensatz sie gegen diese Innenwand aufdrückt, je nach dem ob die Motorkraft auf die Stütze (3) oder das Drehteil (7) gerichtet ist.

2. Vorrichtung nach Anspruch 1, dadurch gekennzeichnet, daß das Kupplungsstück (10) der Drehstütze (3) aus einer Scheibe besteht, die auf der Stütze befestigt ist, z. B. auf der Welle oder dergleichen festgekeilt ist, und in der Ausnehmung (2a) konzentrisch zur Lamellenfeder (13) angeordnet ist und daß die Scheibe (10) mit einer Kerbe (12) versehen ist, die zum Umfang hin offen ist.

3. Vorrichtung nach Anspruch 2, dadurch gekennzeichnet, daß das Kupplungsstück (15) des Drehteils (7) aus einem Finger oder dergleichen besteht, der so vorgesehen ist, daß er in die Kerbe (12) der genannten Scheibe (10) eindringt.

4. Vorrichtung nach Anspruch 3, dadurch gekennzeichnet, daß die genannte Lamellenfeder (13) an ihren zwei Enden mit zwei Laschen (13a, 13b) versehen ist, die im wesentlichen radial angeordnet sind und beiderseits dieses Fingers (15) in der Kerbe (12) der genannten Scheibe (10) eingefügt sind.

5. Vorrichtung nach Anspruch 4, dadurch gekennzeichnet, daß die Lamellenfeder (13) außen mit einer Reibplatte oder mit einem Reibband (14) versehen ist.

6. Vorrichtung nach Anspruch 3, dadurch gekennzeichnet, daß der Finger (15) auf das Drehteil (7) einklappbar angeordnet ist, z. B. auf die Räder des Rollstuhls.

7. Vorrichtung nach Anspruch 6, dadurch gekennzeichnet, daß der Finger (15) entsprechend einer Richtung parallel zur Drehachse des Drehteils (7) gleitend befestigt ist.

8. Vorrichtung nach Anspruch 5, dadurch gekennzeichnet, daß die Lamellenfeder (13) innen mit einem Band (18) ausgestattet ist, welches aus einem weichen Material von hoher Dichte gebildet ist.

0 002 631

FIG.1

FIG.6

FIG.2

FIG.3

FIG.4

FIG.5

0 002 631